# EUROPEAN PATENT APPLICATION

(11) **EP 4 811 199 A1**
(43) Date of publication of application: **23.09.2026**
(21) Application number: 26164982.6
(22) Date of filing: 16.03.2026
(51) Int. Cl.: G06F 21/62, G06F 16/2458

(54) **DYNAMIC SENSITIVITY IN SQL REWRITE**

(30) Priority: 17.03.2025 US 202519081315
(71) Applicant: Beijing Zitiao Network Technology Co., Ltd., Beijing 100190 (CN); Bytedance Technology Ltd., KY1 - 1205 Grand Cayman Cayman Islands (KY)
(72) Inventor: Wu, Xing, Beijing, 100028 (CN); Wang, Li, Beijing, 100028 (CN); Sharma, Sagar, Culver City, CA, 90230 (US); Yan, Qiang, Beijing, 100028 (CN)
(74) Representative: Grünecker Patent- und Rechtsanwälte PartG mbB

(57) **Abstract**

The present disclosure involves methods (200, 300), apparatus, and systems (100, 400) for dynamically determining sensitivity in differential privacy. This can include: identifying a query for aggregate information from a source, wherein the aggregate information is associated with a plurality of users; grouping each piece of information in the source based on an associated user for that piece of information; determining, for each associated user, a primary aggregation, wherein the primary aggregation is a vector representing results to the query sorted by each associated user's contribution to the source; calculating, as a calculated user norm, a user norm for each user's primary aggregation; identifying a subset one or more users whose primary aggregation is greater than the sensitivity associated with the source; and truncating subset one or more users' primary aggregation by a ratio of their associated calculated user norm and the sensitivity.

## Description

### TECHNICAL FIELD

The present disclosure generally relates to dynamically determining sensitivity in differential privacy.

### BACKGROUND

Differential privacy (DP) is a framework for releasing statistical information about datasets while protecting the privacy of individual data subjects. DP enables a data holder to share aggregate patterns of a group while limiting information that is leaked about specific individuals. This can be done by injecting calibrated noise into statistical computations, such that the utility of the statistic is preserved while provably limiting what can be inferred about any individual in the dataset.

### SUMMARY

The present disclosure relates to a method, system, and computer-readable storage media for dynamically determining sensitivity in differential privacy. This can include: identifying a query for aggregate information from a source, wherein the aggregate information is associated with a plurality of users; grouping each piece of information in the source based on an associated user for that piece of information; determining, for each associated user, a primary aggregation, wherein the primary aggregation is a vector representing results to the query sorted by each associated user's contribution to the source; calculating, as a calculated user norm, a user norm for each user's primary aggregation; performing a maximum quantile estimation for the plurality of users based on the calculated user norm to determine a sensitivity associated with the source; identifying a subset one or more users whose primary aggregation is greater than the sensitivity associated with the source; and truncating subset one or more users' primary aggregation by a ratio of their associated calculated user norm and the sensitivity; determining a query result based on the query and the primary aggregation of each user of the plurality of users, the query result comprising a plurality of values, each value associated with a particular user; processing each value of the plurality of values with a differential privacy algorithm, the differential privacy algorithm using, for each value, the sensitivity associated with the particular user to yield a private result; and returning the private result.

Implementations can optionally include one or more of the following features.

In some instances, determining, for each associated user, a primary aggregation, comprises a count of a number of pieces of information associated with each associated user.

In some instances, determining, for each associated user, a primary aggregation, comprises sorting the source by an information type and by associated user, and wherein the vector comprises an entry for each information type, the entry indicating a number of pieces of information associated with the associated user.

In some instances, the calculated user norm is at least one of an L1 norm, or an L2 norm.

In some instances, the differential privacy algorithm uses a Laplace noise distribution, and the calculated user norm is an L1 norm.

In some instances, wherein the differential privacy algorithm uses a Gaussian noise distribution, and the calculated user norm is an L2 norm.

In some instances, the differential privacy algorithm is an algorithm that perturbs an input value by a predetermined noise function.

According to a second aspect, one or more computer-readable storage media is provided. The one or more computer-readable storage media stores one or more instructions that, when executable by one or more computers, cause the one or more computers to perform the method according to the first aspect or one or more implementations of the first aspect.

According to a third aspect, a computer-implemented system is provided. The computer-implemented system includes one or more computers and one or more computer memory devices interoperably coupled with the one or more computers. The one or more computer memory devices have computer-readable storage media storing one or more instructions that, when executed by the one or more computers, perform the method according to the first aspect or one or more implementations of the first aspect.

While generally described as computer-implemented software embodied on tangible media that processes and transforms the respective data, some or all of the aspects can be computer-implemented methods or further included in respective systems or other devices for performing this described functionality. The details of these and other aspects and implementations of the present disclosure are set forth in the accompanying drawings and the description below. Other features, objects, and advantages of the disclosure will be apparent from the description and drawings, and from the claims.

### BRIEF DESCRIPTION OF DRAWINGS

FIG. 1 illustrates a block diagram of an example system for structured query language (SQL) rewrite.
FIG. 2 is a flowchart illustrating an example process for SQL rewrite using users' maximum contribution.
FIG. 3 is a flowchart illustrating an example process for SQL rewrite using users' maximum contribution.
FIG. 4 illustrates a schematic diagram of an example computing system.

Like reference numbers and designations in the various drawings indicate like elements.

### DETAILED DESCRIPTION

This specification relates to methods, apparatuses, and systems for structured query language (SQL) rewrite using users' maximum contributions. Differential privacy (DP) is a technology for the protection of aggregation results to reduce risk of re-identifying user data. One way to implement differential privacy in a query system is to replace original SQL queries with DP-based SQLs. This replacing process can be known as a SQL rewrite. One important step is to change the original aggregation functions to differential privacy functions. For example, replace "sum" with "DP_sum", replace "count" with "DP_count" etc. These DP functions generally have two input parameters. One is the real result, calculated by the original aggregation function. The other is sensitivity, which can refer to the maximum change in the query result caused by the addition or removal of a single individual's data point. Sensitivity is conventionally pre-defined. However, the pre-definition of sensitivity may have the following limitations:

First, it is difficult to pre-define the sensitivity for each scenario on a large-scale DP system. Even for a simple aggregation function like sum, the sensitivities may be different for sum(metric1), sum(metric2), sum(metric3), and so on.

Second, it can be very difficult to pre-define the sensitivity for user-level DP as compared to item-level privacy. For item-level DP, the sensitivity can be defined by directly predicting the maximum value of the original records. However, item-level predefinition is not suitable for user-level DP. Some solutions have proposed user-level methods by bounding user's contribution and stability across transforms and joins. These solutions still rely on the pre-definition of bounding and stability. The failure of pre-definition can have a catastrophic impact on the noisy result, which can lead to the output being completely unavailable.

In the disclosed solution, a new method is proposed to calculate sensitivity. By measuring maximum users' contribution in runtime for user-level DP. This solution further proposes the pipeline SQL rewrite process. This process takes original SQL as input and generates new SQL which complies with the SQL syntax conventions and the theory of DP at the same time.

DP is useful for the protection of aggregation results to avoid re-identifying user data. DP could be used in any SQL query systems where aggregation results should be preserved, like cross-regional queries, sensitive user data queries. This solution provides a practical way to implement user-level DP in a real SQL system by just replacing the original SQL with DP SQL. An example logic for this solution is shown as follows:
Input: The original SQL.
Steps:
   Step 1: Create a user-view where the system can calculate each user's contribution.
   Step 2: Use DP_max function to calculate the user's maximum contribution as sensitivity.
   Step 3: Truncate each user's contribution according to the user-view and sensitivity.
   Step 4: Calculate the real aggregated results based on truncated contribution.
   Step 5: Calculate the DP results based on real results and sensitivity.
Output: The DP SQL
Detailed logic explanation:

Step 1: Create a user-view where each user's contribution is calculated. Then, in all inner SQL statements, whether they are JOIN statements or GROUP BY statements, they will not affect the SQL rewrite logic. The solution can simply retain the inner logic. Take a simple SQL: "select sum(metric) from table_A group by country_code" as an example. The detailed sub-steps are as follows:
i. Adding the "group by user_id" process, yields table t1: "select sum(metric) as user_primary_aggregation from table_A group by country_code, user_id". Here the user's primary aggregation is calculated on each group_key.
ii. Calculate the user's L1-norm or L2-norm contribution by only group by user_id. The L1 norm calculates the sum of the absolute values of vector elements, while the L2 norm calculates the square root of the sum of the squared values of the vector elements. This yields table t2 from t1: "select sum(user_primary_aggregation) as user_contribution from t1 group by user_id". Whether to use L1-norm or L2-norm usually depends on the noisy function. If using Laplace noise as noisy function, then the solution can use L1-norm. If using Gaussian noise as noisy function, then the solution can use L2-norm. In this example, L1-norm contribution is used for explanation.

Step 2: Use DP_max function to calculate the user's maximum contribution as sensitivity. DP_max here could be any DP quantile function. Then the solution can get table t3 and sensitivity from t2: "select dp_max(user_contribution) as sensitivity group by user_id".

Step 3: Engineering steps to make sure each user's contribution to the final result is below the sensitivity. The system can compare the relationship between user's contribution and sensitivity. If the user's contribution is no more than the sensitivity, then it can retain the original user's primary aggregation. If the user's contribution is larger than sensitivity, then it can truncate the user's primary aggregation according to the exceeding ratio. This process can be shown in the following SQL, by which the solution will get table t4:

Step 4: Calculate the aggregation results after truncation. In some implementations, a normal sum function is used here. This process can be shown in the following SQL, by which solution will get t5: "select sum(truncation_value) as non_noisy_result from t4 group by country_code".

Step 5: Get the final DP result combining with the non-noisy result in t4 and sensitivity in t3: It can be shown in the following SQL: "select DP_process(non noisy_result, sensitivity) from t4 cross join select * from t3". The DP_process is a user defined function whose function is to generate DP noise. It could be Lapace noise or Gaussian noise as necessary.

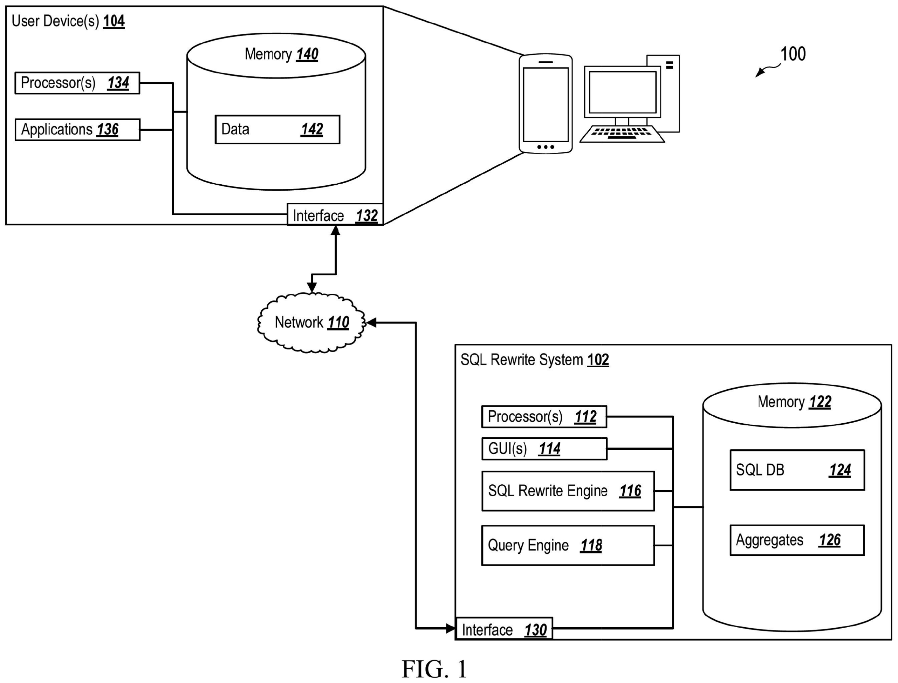

FIG. 1 illustrates a block diagram of an example system 100 for system for structured query language (SQL) rewrite. The system 100 includes an SQL rewrite system 102, and one or more user devices 104, which can communicate using a network 110.

Network 110 facilitates wireless or wireline communications between the components of the system 100 (e.g., between the SQL rewrite system 102, and the user devices 104), as well as with any other local or remote computers, such as additional mobile devices, clients, servers, or other devices communicably coupled to network 110, including those not illustrated in FIG. 1. In the illustrated environment, the network 110 is depicted as a single network, but can comprise more than one network without departing from the scope of this disclosure, so long as at least a portion of the network 110 can facilitate communications between senders and recipients. In some instances, one or more of the illustrated components (e.g., the SQL database 124 and the memory 122) can be included within or deployed to network 110 or a portion thereof as one or more cloud-based services or operations. The network 110 can be all or a portion of an enterprise or secured network, while in another instance, at least a portion of the network 110 can represent a connection to the Internet. In some instances, a portion of the network 110 can be a virtual private network (VPN). Further, all or a portion of the network 110 can comprise either a wireline or wireless link. Example wireless links can include 802.11a/b/g/n/ac, 802.20, WiMax, LTE, and/or any other appropriate wireless link. In other words, the network 110 encompasses any internal or external network, networks, sub-network, or combination thereof operable to facilitate communications between various computing components inside and outside the illustrated system 100. The network 110 can communicate, for example, Internet Protocol (IP) packets, Frame Relay frames, Asynchronous Transfer Mode (ATM) cells, voice, video, data, and other suitable information between network addresses. The network 110 can also include one or more local area networks (LANs), radio access networks (RANs), metropolitan area networks (MANs), wide area networks (WANs), all or a portion of the Internet, and/or any other communication system or systems at one or more locations.

The SQL rewrite system 102 can be a server or web-based system that enables querying and access to one or more databases (e.g., SQL database 124) by one or more user devices 104. However, the SQL rewrite system 102 can introduce noise using DP algorithms to the query responses, ensuring privacy of the data owners (or users) within the SQL database 124. The SQL rewrite system 102 can include one or more processors 112, graphical user interfaces (GUIs) 114, an SQL rewrite engine 116, a query engine 118, and a memory 122 storing an SQL database 124 and one or more aggregates 126.

Each of the one or more processors 112 can be a central processing unit (CPU), an application specific integrated circuit (ASIC), a field-programmable gate array (FPGA), or another suitable component. Generally, the processor 112 executes instructions and manipulates data to perform the operations of the SQL rewrite system 102. Specifically, the processor 112 executes the algorithms and operations described in the illustrated figures, as well as the various software modules and functionality, including the functionality for sending communications to and receiving transmissions from the user devices 104, as well as to other devices and systems. Each processor 112 can have a single or multiple cores, with each core available to host and execute an individual processing thread. Further, the number of, types of, and particular processors 112 used to execute the operations described herein can be dynamically determined based on a number of requests, interactions, and operations associated with the SQL rewrite system 102.

Regardless of the particular implementation, "software" includes computer-readable instructions, firmware, wired and/or programmed hardware, or any combination thereof on a tangible medium (transitory or non-transitory, as appropriate) operable when executed to perform at least the processes and operations described herein. In fact, each software component can be fully or partially written or described in any appropriate computer language including C, C++, JavaScript, Java^{™}, Visual Basic, assembler, Perl^{®}, any suitable version of fourth-generation programming language (4GL), as well as others.

GUI 114 of the SQL rewrite system 102 interfaces with at least a portion of the system 100 for any suitable purpose, including generating a visual representation of any particular application or results and/or the content associated with any components of the user devices 104. In particular, the GUI 114 can be used to present results of a query or search, or allow a developer to input queries or prompts to the SQL rewrite system 102, as well as to otherwise interact and present information associated with one or more applications. GUI 114 can also be used to view and interact with various web pages, applications, and web services located local or external to the SQL rewrite system 102. Generally, the GUI 114 provides the user with an efficient and user-friendly presentation of data provided by or communicated within the system. The GUI 114 can include a plurality of customizable frames or views having interactive fields, pull-down lists, and buttons operated by the user. In general, the GUI 114 is often configurable, supports a combination of tables and graphs (e.g., bar, line, pie, and/or status dials), and is able to build real time portals, application windows, and presentations. Therefore, the GUI 114 contemplates any suitable graphical user interface, such as a combination of a generic web browser, a web-enable application, intelligent engine, and command line interface (CLI) that processes information in the platform and efficiently presents the results to the user visually.

Memory 122 can represent a single memory or multiple memories. The memory 122 can include any memory or database module and can take the form of volatile or non-volatile memory including, without limitation, magnetic media, optical media, random access memory (RAM), read-only memory (ROM), removable media, or any other suitable local or remote memory component. The memory 122 can store various objects or data, including digital asset data, public keys, user and/or account information, administrative settings, password information, caches, applications, backup data, repositories storing business and/or dynamic information, and any other appropriate information associated with the SQL rewrite system 102, including any parameters, variables, algorithms, instructions, rules, constraints, or references thereto. Additionally, the memory 122 can store any other appropriate data, such as SQL database 124, user profiles, algorithms or processes (e.g., aggregates 126), firmware logs and policies, firewall policies, a security or access log, print or other reporting files, as well as others. While illustrated within the system 100, memory 122 or any portion thereof, including some or all of the particular illustrated components, can be located remote from the system 100 in some instances, including as a cloud application or repository or as a separate cloud application or repository when the system 100 itself is a cloud-based system.

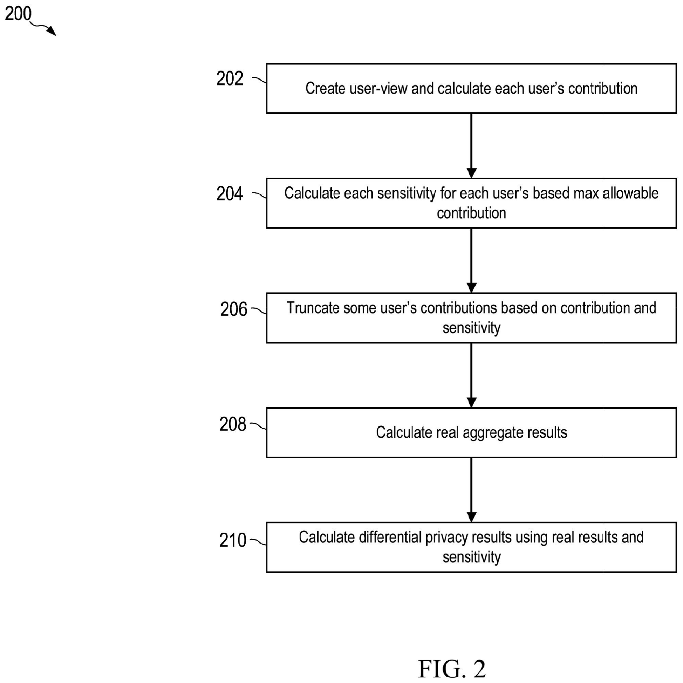

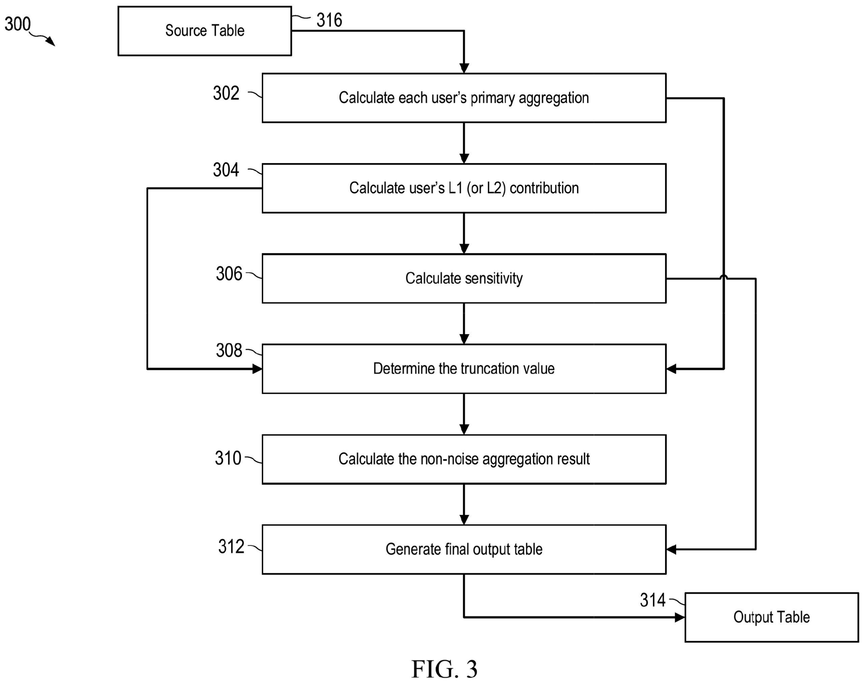

The SQL rewrite engine 116 can be used to ensure privacy of queries outputs. In general, the SQL rewrite engine 116 can receive queries (e.g., from query engine 118) and rewrite the query in a manner that utilizes DP. The details of this SQL rewrite are discussed below with reference to FIGS. 2 and 3. In general, a normal SQL query is received, it can be executed on the SQL database to yield a result, and then the result is processed using a DP algorithm before it is returned. However, in order to provide the correct input parameters to the DP algorithm, ensuring user privacy is maintained, the SQL rewrite engine 116 must determine the allowable sensitivity for the queried data. In some implementations, the SQL rewrite engine 116 accesses a repository of aggregates 126 when rewriting SQL. In some instances, these aggregates 126 can be updated periodically, or are selected based on the input query being rewritten.

Query engine 118 can be used by a user device 104, via one or more graphical user interfaces 114. In general, the query engine 118 can take inputs from the user devices 104 and generate SQL formatted queries for information from the SQL database 124. In some implementations, the query engine 118 limits queries to aggregate data. That is, user devices 104 are not permitted to query specific fields or rows of data, and are permitted only to make certain queries (e.g., "mean( )", "sum( )", "count( )", or other general queries).

The SQL database 124 can store data including tables and entries in an SQL format. Additionally, the SQL database 124 can be routinely updated, modified, or queried by a number of user devices 104. In some implementation, SQL database 124 can store sensitive user information, and as such user devices 104 need to perform aggregate queries of the SQL database 124 without being able to reveal private information about any users.

Interface 130 is used by the SQL rewrite system 102 to communicate with other systems in a distributed environment - including within the system 100 - connected to the network 110 (e.g., user devices 104, and other systems communicably coupled to the illustrated SQL rewrite system 102 and/or network 110. Generally, the interface 130 includes logic encoded in software and/or hardware in a suitable combination and operable to communicate with the network 110 and other components. More specifically, the interface 130 can include software supporting one or more communication protocols associated with communications such that the network 110 and/or interface's 130 hardware is operable to communicate physical signals within and outside of the illustrated system 100. Still further, the interface 130 can allow the SQL rewrite system 102 to communicate with the user devices 104, and/or other portions illustrated within the system 100 to perform the operations described herein.

User devices 104 can be computing devices or computers used by one or more users and developers of the software and hardware within system 100. For example, the user devices 104 can interact with the SQL rewrite system 102 to request generation of new aggregates or run a particular query within the SQL database 124. As used in the present disclosure, the term "computer" or "computing devices" is intended to encompass any suitable processing device. For example, the user devices 104 can be any computer or processing device such as, for example, a blade server, general-purpose personal computer (PC), Mac^{®} workstation, UNIX-based workstation, or any other suitable device. In other words, the present disclosure contemplates computers other than general-purpose computers, as well as computers without conventional operating systems. The user devices 104, in some instances, can be desktop systems, a client terminal, or any other suitable device, including a mobile device, such as a smartphone, tablet, smartwatch, or any other mobile computing device. In general, each illustrated component can be adapted to execute any suitable operating system, including Linux, UNIX, Windows, Mac OS^{®}, Java^{™}, Android^{™}, Windows Phone OS, or iOS^{™}, among others. The user devices 104 can include one or more specific applications 136 executing on the user devices 104, or the user devices 104 can include one or more Web browsers or web applications that can interact with particular applications executing remotely from the user devices 104. User devices 104 can include a memory 140, which can be similar to or different from memory 122 and can store device data 142. The user devices 104 can include an interface 132 which enables communication with other components of system 100, and can be similar to interface 130.

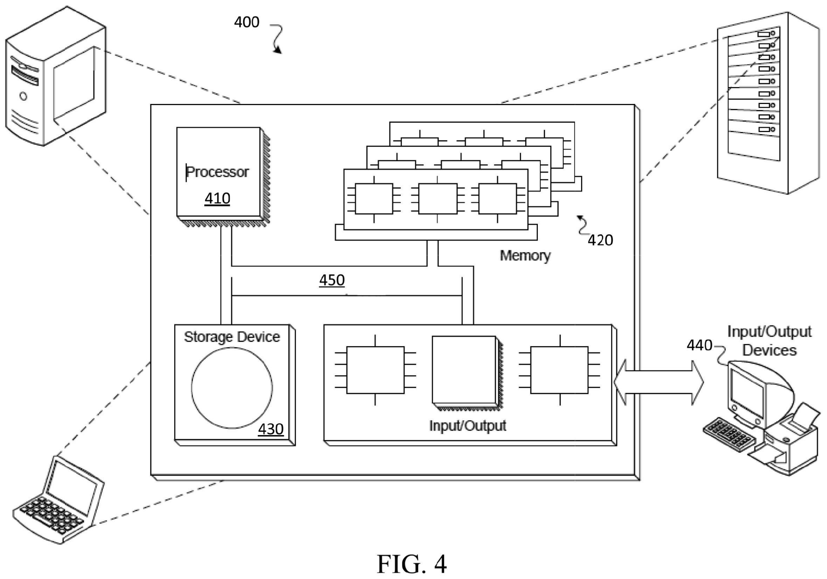

FIG. 2 is a flowchart illustrating an example process 200 for SQL rewrite using users' maximum contribution. The example process 200 can be performed by a system for example, system 100 as described above with respect to FIG. 1. The operations shown in process 200 may not be exhaustive and other operations can be performed as well before, after, or in between any of the illustrated operations. Further, some of the operations may be performed simultaneously, or in a different order than shown in FIG. 2. In some implementations, some of the operations may be performed by a computer, or multiple computers. The one or more computers the process 200 will be described as being performed by a system of, located in one or more locations, and programmed appropriately in accordance with this specification. For example, one or more of a computation system 400 of FIG. 4, appropriately programmed, can perform the process 200.

At 202, a user-view is created and each individual user's contribution to the source data is calculated. This view can be created, for example, by adding a grouping process to the original SQL query. For example, the "group by user-id" process can sort the source data by user. In some implementations, additional groups, categories, or information types are added to the view. For example, the process "group by group_key" can also be added. In this manner, the source data can be sorted by user_id and group_key, and each user's contribution for every "group" can be counted. This contribution, which can be called a user's "primary aggregation" can be a vector, with terms in the vector representing the number of entries associated with that particular group-key from the user.

At 204, the user's associated sensitivity is calculated based on a maximum contribution. In some implementations, the maximum contribution is calculated using a DP_max function, or a DP quantile function. For example, an "abovethreshold" subroutine can be iteratively called to find a maximum quantile with an unbounded range in a dataset, while maintaining privacy. This yields and estimate of the maximum contribution to the dataset that any individual user provided. This max contribution can be selected as a sensitivity for the dataset, giving each dataset a different sensitivity depending on the maximum contribution to the source data.

At 206, each user's contribution is compared to the dataset's associated sensitivity. If their contribution is greater than this sensitivity threshold, their primary aggregation is truncated in order to reduce them. In some implementations, each user's contributions are truncated by the ratio of the sum of their primary aggregation divided by the dataset sensitivity. This ratio normalizes the primary aggregations that are greater than the estimated maximum.

At 208, the real aggregate results are calculated. This can be calculated without DP but based on the truncated information from above. For example, the original (non-DP) query can be executed on the aggregate dataset that includes the truncated data from 206. This will yield non-noisy values, that have the potential to leak user data if returned directly.

At 210, the non-noisy values, and the sensitivity associated with the datasets are used as input parameters to a DP process, which injects noise into the non-noisy values in order to obscure the user information and ensure privacy is maintained without statistically altering the results. This process can add Laplace noise, Gaussian noise, or other noise distributions.

FIG. 3 is a flowchart illustrating an example process 300 for SQL rewrite using users' maximum contribution. The example process 300 can be performed by a system for example, SQL rewrite system 102 as described above with respect to FIG. 1. The operations shown in process 300 may not be exhaustive and other operations can be performed as well before, after, or in between any of the illustrated operations. Further, some of the operations may be performed simultaneously, or in a different order than shown in FIG. 3. In some implementations, some of the operations may be performed by a computer, or multiple computers. The one or more computers the process 300 will be described as being performed by a system of, located in one or more locations, and programmed appropriately in accordance with this specification. For example, one or more of a computation system 400 of FIG. 4, appropriately programmed, can perform the process 300.

At 302, data from a source table (316) is used in conjunction with an input query to calculate a primary aggregation for each user. The primary aggregation can be the query results sorted by user and information type (or group key). In some implementations, the primary aggregation is a vector, with each term being a query result for a certain group type of the data.

At 304, each user's normalization is calculated based on their primary aggregation. This norm is a mathematical term used to calculate the dataset's sensitivity, and to truncate data in processes described below. In some implementations, the L1 norm is calculated. In some implementations, the L2 norm, or both L1 and L2, or other normalizations are calculated. The L1 norm calculates the sum of the absolute values of vector elements, while the L2 norm calculates the square root of the sum of the squared values of the vector elements. The L1 norm can promote sparsity in solutions, leading to some coefficients becoming exactly zero. In DP, the type of noise used to perturb the output can determine which norm to use. For example, if a Laplace distribution is used for the noise, the L1 norm should be calculated at 304. In another example, if a Gaussian distribution is used, the L2 norm should be calculated.

At 306, the dataset's sensitivity is calculated using the previously calculated norm and a maximum DP quantile function. This provides an estimate of what the maximum contribution by any single user is in the dataset and can be used to calculate the sensitivity of that dataset.

At 308, primary aggregations that exceed the sensitivity value for the dataset are truncated. Primary aggregations that are to be truncated can be truncated by the following equation: $Truncated {Aggregation}_{User} = Primary {Aggregation}_{User} ∗ \frac{User Norm}{Sensitivity}$ . In some implementations, these truncated aggregations are used in future calculations of the query to ensure that no individuals contribution exceeds the sensitivity of the dataset, and thus no privacy leakage occurs.

At 310, an aggregation result without noise is calculated. This aggregation result can use the truncated (and non-truncated) primary aggregations from above, processed according to the original query. In some implementations, this non-noise aggregation result, also known as the "real" result in DP applications, includes some error due to the truncation above.

At 312, the non-noise aggregated results are processed using a DP algorithm and the calculated dataset sensitivity to return a noisy result. The noisy result can be compiled into an output table (314) and returned to the query originator.

The following is an illustrative example pseudo code portion, where an input SQL query has been rewritten to be differentially private:

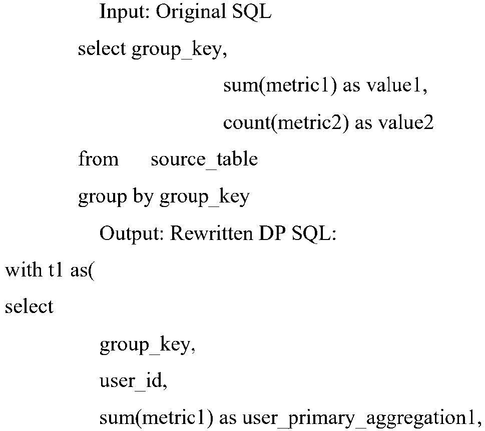

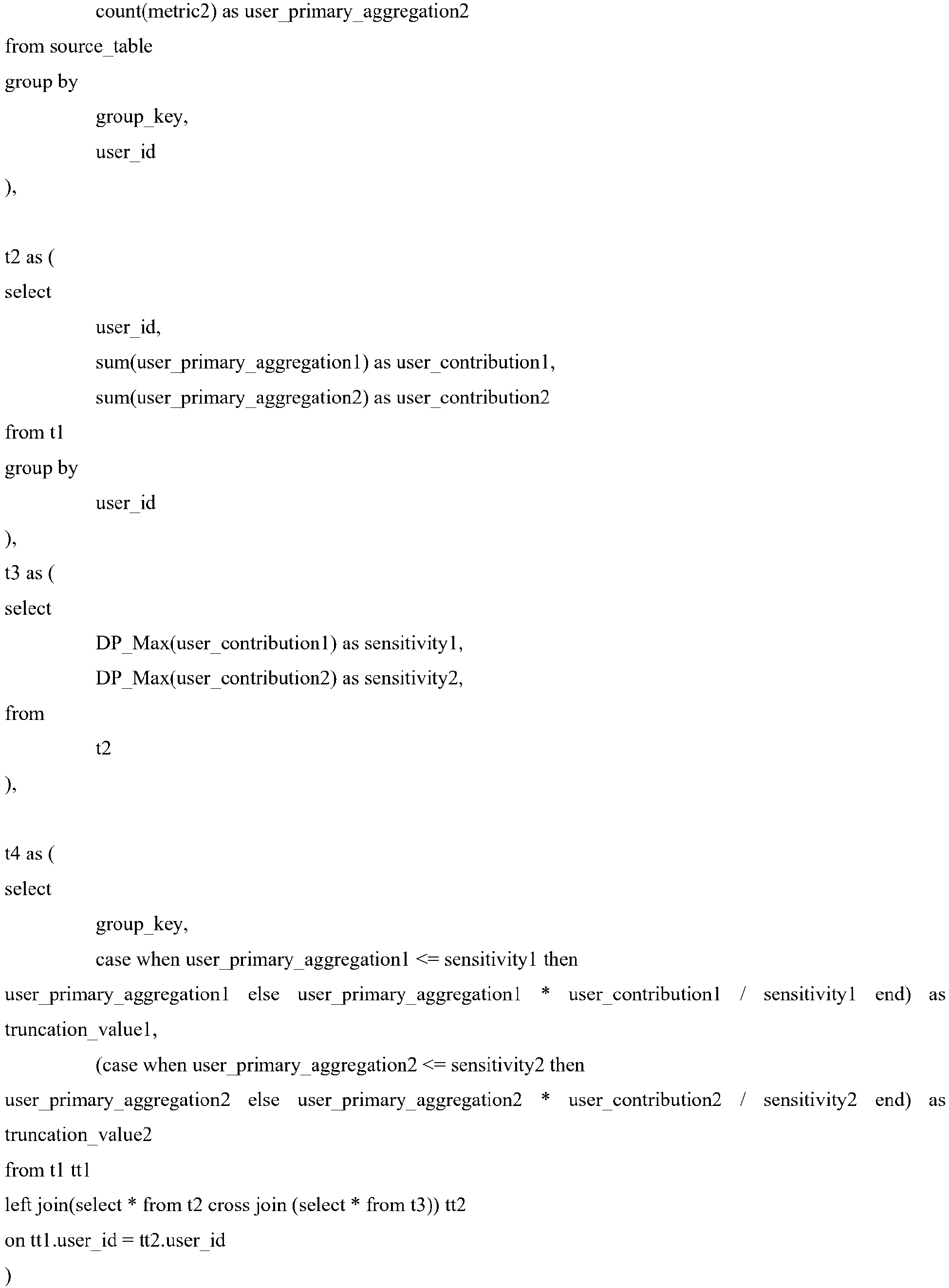

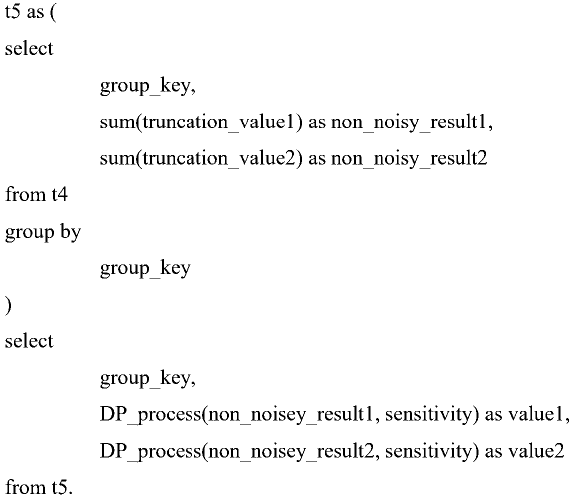

FIG. 4 illustrates a schematic diagram of an example computing system 400. The system 400 can be used for the operations described in association with the implementations described herein. For example, the system 400 may be included in computing devices of the one or more online components and/or the one or more offline components. The system 400 includes a processor 410, a memory 420, a storage device 430, and an input/output device 440, which are interconnected using a system bus 450. The processor 410 is capable of processing instructions for execution within the system 400. In some implementations, the processor 410 is a single-threaded processor. The processor 410 is a multi-threaded processor. The processor 410 is capable of processing instructions stored in the memory 420 or on the storage device 430 to display graphical information for a user interface on the input/output device 440.

The memory 420 stores information within the system 400. In some implementations, the memory 420 is a computer-readable medium. The memory 420 can be a volatile memory unit or a non-volatile memory unit. The storage device 430 is capable of providing mass storage for the system 400. The storage device 430 is a computer-readable medium. The storage device 430 may be a floppy disk device, a hard disk device, an optical disk device, or a tape device. The input/output device 440 provides input/output operations for the system 400. The input/output device 440 includes a keyboard and/or pointing device. The input/output device 440 includes a display unit for displaying graphical user interfaces.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random-access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, implementations of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Implementations of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship with each other. In some implementations, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of what may be claimed, but rather as descriptions of features that may be specific to particular implementations. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features may be described as acting in certain combinations and even initially claimed as such, one or more features from a claimed combination can, in some cases, be excised from the combination, and the claimed combination may be directed to a sub-combination or variation of a sub-combination.

As used in this disclosure, the terms "a," "an," or "the" are used to include one or more than one unless the context clearly dictates otherwise. The term "or" is used to refer to a nonexclusive "or" unless otherwise indicated. The statement "at least one of A and B" has the same meaning as "A, B, or A and B." In addition, the phraseology or terminology employed in this disclosure, and not otherwise defined, is for the purpose of description only and not of limitation. Any use of section headings is intended to aid reading of the document and is not to be interpreted as limiting; information that is relevant to a section heading may occur within or outside of that particular section.

As used in this disclosure, the term "about" or "approximately" can allow for a degree of variability in a value or range, for example, within 10%, within 5%, or within 1% of a stated value or of a stated limit of a range.

As used in this disclosure, the term "substantially" refers to a majority of, or mostly, as in at least about 50%, 60%, 70%, 80%, 90%, 95%, 96%, 97%, 98%, 99%, 99.5%, 99.9%, 99.99%, or at least about 99.999% or more.

Values expressed in a range format should be interpreted in a flexible manner to include not only the numerical values explicitly recited as the limits of the range, but also the individual numerical values or sub-ranges encompassed within that range as if each numerical value and sub-range is explicitly recited. For example, a range of "0.1% to about 5%" or "0.1% to 5%" should be interpreted to include about 0.1% to about 5%, as well as the individual values (for example, 1%, 2%, 3%, and 4%) and the sub-ranges (for example, 0.1% to 0.5%, 1.1% to 2.2%, 3.3% to 4.4%) within the indicated range. The statement "X to Y" has the same meaning as "about X to about Y," unless indicated otherwise. Likewise, the statement "X, Y, or Z" has the same meaning as "about X, about Y, or about Z," unless indicated otherwise.

Particular implementations of the subject matter have been described. Other implementations, alterations, and permutations of the described implementations are within the scope of the following claims as will be apparent to those skilled in the art. While operations are depicted in the drawings or claims in a particular order, such operations are not required to be performed in the particular order shown or in sequential order, or that all illustrated operations be performed (some operations may be considered optional), to achieve desirable results. In certain circumstances, multitasking or parallel processing (or a combination of multitasking and parallel processing) may be advantageous and performed as deemed appropriate.

Moreover, the separation or integration of various system modules and components in the previously described implementations are not required in all implementations, and the described components and systems can generally be integrated together or packaged into multiple products.

Accordingly, the previously described example implementations do not define or constrain the present disclosure. Other changes, substitutions, and alterations are also possible.

The foregoing description of the specific implementations can be readily modified and/or adapted for various applications. Therefore, such adaptations and modifications are intended to be within the meaning and range of equivalents of the disclosed implementations, based on the teaching and guidance presented herein.

The breadth and scope of the present disclosure should not be limited by any of the above-described example implementations but should be defined only in accordance with the following claims and their equivalents. Accordingly, other implementations also are within the scope of the claims.

## Claims

1. A computer-implemented method (200, 300) comprising:
identifying a query for aggregate information from a source, wherein the aggregate information is associated with a plurality of users;
grouping each piece of information in the source based on an associated user for that piece of information;
determining, for each associated user, a primary aggregation, wherein the primary aggregation is a vector representing results to the query sorted by each associated user's contribution to the source;
calculating, as a calculated user norm, a user norm for each user's primary aggregation;
performing a maximum quantile estimation for the plurality of users based on the calculated user norm to determine a sensitivity associated with the source;
identifying a subset one or more users whose primary aggregation is greater than the sensitivity associated with the source; and
truncating subset one or more users' primary aggregation by a ratio of their associated calculated user norm and the sensitivity;
determining a query result based on the query and the primary aggregation of each user of the plurality of users, the query result comprising a plurality of values, each value associated with a particular user;
processing each value of the plurality of values with a differential privacy algorithm, the differential privacy algorithm using, for each value, the sensitivity associated with the particular user to yield a private result; and
returning the private result.

2. The method (200, 300) of claim 1, wherein determining, for each associated user, a primary aggregation, comprises a count of a number of pieces of information associated with each associated user.

3. The method (200, 300) of claim 1, wherein determining, for each associated user, a primary aggregation, comprises sorting the source by an information type and by associated user, and wherein the vector comprises an entry for each information type, the entry indicating a number of pieces of information associated with the associated user.

4. The method (200, 300) of claim 1, wherein the calculated user norm is at least one of an L1 norm, or an L2 norm.

5. The method (200, 300) of claim 1, wherein the differential privacy algorithm uses a Laplace noise distribution, and the calculated user norm is an L1 norm.

6. The method (200, 300) of claim 1, wherein the differential privacy algorithm uses a Gaussian noise distribution, and the calculated user norm is an L2 norm.

7. The method (200, 300) of claim 1, wherein the differential privacy algorithm is an algorithm that perturbs an input value by a predetermined noise function.

8. One or more computer-readable storage medium (420, 430) storing one or more instructions that, when executable by one or more computers, cause the one or more computers to perform operations comprising:
identifying a query for aggregate information from a source, wherein the aggregate information is associated with a plurality of users;
grouping each piece of information in the source based on an associated user for that piece of information;
determining, for each associated user, a primary aggregation, wherein the primary aggregation is a vector representing results to the query sorted by each associated user's contribution to the source;
calculating, as a calculated user norm, a user norm for each user's primary aggregation;
performing a maximum quantile estimation for the plurality of users based on the calculated user norm to determine a sensitivity associated with the source;
identifying a subset one or more users whose primary aggregation is greater than the sensitivity associated with the source; and
truncating subset one or more users' primary aggregation by a ratio of their associated calculated user norm and the sensitivity;
determining a query result based on the query and the primary aggregation of each user of the plurality of users, the query result comprising a plurality of values, each value associated with a particular user;
processing each value of the plurality of values with a differential privacy algorithm, the differential privacy algorithm using, for each value, the sensitivity associated with the particular user to yield a private result; and
returning the private result.

9. The medium (420, 430) of claim 8, wherein determining, for each associated user, a primary aggregation, comprises a count of a number of pieces of information associated with each associated user.

10. The medium (420, 430) of claim 8, wherein determining, for each associated user, a primary aggregation, comprises sorting the source by an information type and by associated user, and wherein the vector comprises an entry for each information type, the entry indicating a number of pieces of information associated with the associated user.

11. The medium (420, 430) of claim 8, wherein the calculated user norm is at least one of an L1 norm, or an L2 norm.

12. The medium (420, 430) of claim 8, wherein the differential privacy algorithm uses a Laplace noise distribution, and the calculated user norm is an L1 norm.

13. The medium (420, 430) of claim 8, wherein the differential privacy algorithm uses a Gaussian noise distribution, and the calculated user norm is an L2 norm.

14. The medium (420, 430) of claim 8, wherein the differential privacy algorithm is an algorithm that perturbs an input value by a predetermined noise function.

15. A computer-implemented system (100, 400), comprising:
one or more computers; and
one or more computer memory devices interoperably coupled with the one or more computers and having computer-readable storage media storing one or more instructions that, when executed by the one or more computers, perform the method of any of claims 1-7.
